# EUROPEAN PATENT SPECIFICATION

(11) **EP 3 723 253 B1**
(45) Date of publication and mention of the grant of the patent: **23.08.2023**
(21) Application number: 19168441.4
(22) Date of filing: 10.04.2019
(51) Int. Cl.: B60L 9/18, B60L 50/53, H02M 3/156, H02M 1/32

(54) **CONVERTER ARRANGEMENT WITH NEUTRAL POINT CLAMPED CHOPPERS**
UMRICHTERANORDNUNG MIT NEUTRALPUNKTGEKLEMMTEN STELLERN
AGENCEMENT DE CONVERTISSEUR COMPORTANT DES DÉCOUPEURS VERROUILLÉS AU POINT NEUTRE

(43) Date of publication of application: 14.10.2020
(73) Proprietor: ABB Schweiz AG, 5400 Baden (CH)
(72) Inventor: STEMMLER, Christoph, 5415 Nussbaumen (CH); MARIAPPAN, Senthilnathan, 5400 Baden (CH); FRIEDLI, Thomas, 5400 Baden (CH); KREIENBUEHL, Martin, 8180 Bülach (CH)
(74) Representative: Qip Patentanwälte Dr. Kuehn & Partner mbB

(56) References cited:
- CN-U- 205 901 353
- CN-U- 207 225 097
- US-A1- 2002 130 645
- US-A1- 2018 234 010
- SOMMER H W ET AL: "Analysis of a low loss turn-off network for a GTO chopper for international railway cars operating under different railway supply voltages", PROCEEDINGS OF THE INTERNATIONAL CONFERENCE ON INDUSTRIAL ELECTRONICS, CONTROL AND INSTRUMENTATION (IECON). KOBE, OCT. 28 - NOV. 1, 1991; [PROCEEDINGS OF THE INTERNATIONAL CONFERENCE ON INDUSTRIAL ELECTRONICS, CONTROL AND INSTRUMENTATION (IECON)], NE, vol. CONF. 17, 28 October 1991 (1991-10-28), pages 656-661, XP010042079, DOI: 10.1109/IECON.1991.239209 ISBN: 978-0-87942-688-0

## Description

### FIELD OF THE INVENTION

The invention relates to a converter arrangement and a traction vehicle.

### BACKGROUND OF THE INVENTION

Battery powered trains may be useful to replace Diesel powered vehicles on non-electrified lines. However, the huge demand for batteries in street bound e-mobility is defining the requirements of the typical available battery cells. These battery cells are typically designed for low voltage operation, in particular for an operation voltage of about 800 V DC.

On the other hand, the typical system voltage for rail propulsion systems is medium voltage, such as about 2000 V DC, this is usually due to increased power demand compared to electrical car. Because of this, the rail propulsion system has to be connected via a DC-to-DC converter with the energy storage system. This may be done with a galvanically separated converter, which, however, may have comparable high losses, reducing the operation distance of the traction vehicle.

The scientific article of Sommer et al, "Analysis of a low loss turn-off network for GTO chopper for international railway cars operating under different railway supply voltages", Proceedings of the international conference on industrial electronics, Control and instrumentation (IECON), Kobe, Oct. 28 - Nov. 1, 1991, 28 October 1991, pages 656-661, relates to a low loss turn-off snubber circuit for a railway vehicle. As shown, such a circuit comprises two chopper circuits connected symmetrically with a split DC link on the input side.

CN 205 901 353 U relates to a high power charging device, which may be used in domestic trams. A circuit is shown, which comprises two half-bridge circuits connected in parallel to a catenary line, each of which has an individual DC link. An over-voltage protection circuit is mentioned.

US 2018/234 010 A1 relates to a multi-power conversion device with three pairs of half-bridges connected in parallel and series to a split DC link on an input side. On their output side, all half-bridges supply one capacitor.

CN 207 225 097 U shows a converter used in railway applications, which supplies two loads. The converter has an input rectifier and two output inverters, which are connected in parallel to a DC link supplied by the input rectifier.

US 2013/223 112 A1 shows a snubber circuit interconnecting the positive and negative input of an inverter unit with a neutral point of the inverter unit. The snubber circuit is used for keeping down spurious high-frequency or voltage peaks of the inverter unit.

### DESCRIPTION OF THE INVENTION

It is an objective of the invention to provide a simple designed converter with low losses, which is adapted for interconnecting an input power converter with an energy storage system. It is a further objective of the invention to increase the operation distance of a traction vehicle.

These objectives are achieved by the subject-matter of the independent claims. Further exemplary embodiments are evident from the dependent claims and the following description.

A first aspect of the invention relates to a converter arrangement, for example for a traction vehicle. The converter arrangement may interconnect a railway propulsion system with an energy storage system. However, it also may be possible that the converter arrangement is employed in a high power MV marine propulsion. In general, the converter arrangement may be used in any kind of means of transportation, in particular those, which do not have a continuous external power supply from an electrical grid.

According to an embodiment of the invention, the converter arrangement comprises a first chopper circuit and a second chopper circuit, which may be both neutral point clamped.

The first chopper circuit connects a positive input or a neutral point with a positive output, wherein the first chopper circuit comprises a first switch arrangement, a first inductor and a first capacity, wherein the first switch arrangement is adapted for connecting the first inductor with the positive input or with the neutral point, the first inductor interconnects the first switch arrangement with the positive output and the first capacity interconnects the positive output with the neutral point.

The second chopper circuit connects a negative input or the neutral point with a negative output, wherein the second chopper circuit comprises a second switch arrangement, a second inductor and a second capacity, wherein the second switch arrangement is adapted for connecting the second inductor with the negative input or with the neutral point, the second inductor interconnects the second switch arrangement with the negative output and the second capacity interconnects the negative output with the neutral point.

The inputs of the converter arrangement may be connected to a DC link, which may be on a medium voltage, i.e. a voltage of more than 1000 V, such as between 1500 and 2000 V. The outputs of the converter arrangement may be connected to an energy storage system or any series-connected auxiliary device, which are designed for low voltage, i.e. a voltage of less than 1000 V, such as between 500 V and 900 V. Since two neutral point clamped chopper circuits are used, smaller inductors and capacitors may be used, resulting in lower costs.

A voltage difference between the outputs and the inputs may become smaller and the two neutral point clamped choppers may operate with a very efficient duty cycle. The inductors may be comparable small water cooled inductors, which can be integrated inside the converter housing. An additional forced ambient air cooling may not be necessary.

According to an embodiment of the invention, the converter arrangement further comprises an overvoltage protection device is adapted for short-circuiting the positive output with the negative output, when an overvoltage is measured between the positive output and the negative output, between the positive output and the neutral point and/or between the negative output and the neutral point.

It also may be possible that the overvoltage protection device adapted for short-circuiting the positive output with the neutral point, when an overvoltage is measured between the positive output and the neutral point. The overvoltage protection device also may be adapted for short-circuiting the negative output with the neutral point, when an overvoltage is measured between the negative output and the neutral point.

As the converter arrangement does not have galvanic separation, the overvoltage protection device may be beneficial in the case of a fault. Also the overvoltage protection device may be integrated in the propulsion system and/or the input power converter.

The overvoltage protection device with neutral point connection may apply a low voltage insulation on the output and/or energy storage side and a medium voltage insulation on the input and/or propulsion side. The overvoltage protection device may separately monitor the upper and lower voltage.

According to an embodiment of the invention, the overvoltage protection device comprises a first semiconductor switch connecting the positive output and the neutral point and a second semiconductor switch connecting the neutral point with the negative output. The overvoltage protection device may comprise a controller and sensors measuring the above-mentioned voltages. In the case of a measured overvoltage, it may switch the first and second semiconductor switch into a conducting state. This may blow fuses or more general a overcurrent protection devices as described below.

Every semiconductor switch may be composed of a controllable semiconductor device, such as an IGBT or thermistor with an antiparallel free-wheeling diode.

According to an embodiment of the invention, the converter arrangement comprises an auxiliary device connected between the positive output and the negative output. The auxiliary device may be a power supply and/or may comprise an inverter for generating an AC voltage from the DC voltage provided between the positive output and the negative output.

According to an embodiment of the invention, the converter arrangement comprises a first auxiliary device and a second auxiliary device connected between the positive output and the negative output. Additionally to series-connected battery storage devices, any type of low voltage devices, which may require a symmetric voltage with respect to ground, may be connected to the converter arrangement without a galvanic separation. Such auxiliary devices may include auxiliary inverters, an auxiliary distribution grid, etc.

According to an embodiment of the invention, the first auxiliary device is a first energy storage device and the second auxiliary device is a second energy storage device. Both energy storage devices may battery storage devices. A battery storage device may comprise one or more battery cells. The battery cells may be interconnected for forming a low voltage battery storage, i.e. having an operation voltage below 1000 V, such as 500 V to 900 V. For example, two standard low voltage battery storage devices, which also may be used in e-mobility application, may be used. It also may be possible that the energy storage devices are provided with supercapacitors.

In the case of energy storage devices as auxiliary devices, a special control mode may be applied, when the vehicle is operating off the grid and/or catenary free. The first and second chopper may be switched in such a way, that the outputs and the inputs are continuously connected with each other. For example, this may be achieved, by switching its semiconductor switches permanently on state. In particular, no switching is needed. In such a way, the energy storage devices may be directly connected to the DC link of the propulsion system and/or an input power converter. This may be a very efficient way of battery powered driving and may directly increase the operation range of the vehicle. Alternatively, the size of the energy storage systems may be reduced.

The converter arrangement may comprise a controller, in which the control mode is implemented.

According to an embodiment of the invention, in a first operation mode, the controller is adapted for switching the first switch arrangement of the first chopper and the second switch arrangement of the second chopper, such that a voltage at the first and second input is reduced to a second voltage at the output. The second voltage may be lower than the first voltage. The first switch arrangement and the second first switch arrangement may be switched regularly with a specific switching frequency, such as 1 kHz and above.

According to an embodiment of the invention, in a second operation mode, the controller is adapted for switching the first switch arrangement of the first chopper and the second switch arrangement of the second chopper, such that the positive input is continuously connected with the positive output and that the negative input is continuously connected with the negative output.

According to an embodiment of the invention, the overvoltage protection device comprises a first semiconductor switch connecting the positive output and a midpoint between the first auxiliary device and the second auxiliary device and a second semiconductor switch connecting the midpoint with the negative output. It may be that the part of the overvoltage protection device, which is short-circuiting the positive and the negative output, is not connected to the neutral point of the chopper circuits but directly to a midpoint between the auxiliary devices.

In this case, the overvoltage protection device may comprise a first diode connected (in conduction direction) between the neutral point and the positive output and a second diode connected (in conduction direction) between the negative output and the neutral point. These diodes may protect the capacitors of the chopper circuits.

In general, the neutral point and/or the midpoint of the auxiliary devices may be grounded. Such a grounding may be a hard grounding or a soft grounding.

According to an embodiment of the invention, the neutral point of the chopper circuits is grounded. The neutral point may be grounded via a capacitor and/or a resistor, which may be connected in parallel to the capacitor. This may be called soft grounding. However, it also may be possible that the neutral point is directly connected to ground. This may be called hard grounding.

According to an embodiment of the invention, a midpoint between the first auxiliary device and the second auxiliary device is directly connected to ground. In other words, the midpoint may be hard grounded. According to an embodiment, the midpoint and the neutral point are separated and when the neutral point is soft grounded.

According to an embodiment of the invention, a midpoint between the first auxiliary device and the second auxiliary device is connected to the neutral point. In such a way, the midpoint may be grounded via the neutral point.

According to an embodiment of the invention, the converter arrangement further comprises a DC link interconnecting the positive input and the negative input. The DC link may be supplied by an input power converter, which is adapted for converting a grid voltage and/or a generator voltage into the DC link voltage. The DC link may be part of the propulsion system.

According to an embodiment of the invention, the neutral point is connected to a midpoint of the DC link. When the DC link is a split DC link and/or a three-level DC link and has a SY neutral point, the neutral point of the DC link may be connected to the neutral point of the chopper circuits.

According to an embodiment of the invention, the converter arrangement further comprises a first input side overcurrent protection device between the positive input and the positive output. Furthermore, the converter arrangement may comprise a second input side overcurrent protection device between the negative input and the negative output. The first input side overcurrent protection device may be connected between the first inductor and the positive output. The first input side overcurrent protection device may be connected between the first inductor and the first capacity. The second input side overcurrent protection device may be connected between the second inductor and the negative output. The second input side overcurrent protection device may be connected between the second inductor and the second capacity.

In general, an overcurrent protection device may be a fuse, a circuit breaker, a mechanical switch, etc.

According to an embodiment of the invention, the converter arrangement further comprises a first output side overcurrent protection device between the positive output and the first auxiliary device and/or a second output side overcurrent protection device between the negative output and the second auxiliary device. These overcurrent protection devices may protect the series-connected auxiliary devices.

According to an embodiment of the invention, the converter arrangement further comprises a third output side overcurrent protection device connected to a midpoint between the first auxiliary device and the second auxiliary device.

Such a overcurrent protection device may connect a midpoint of the overvoltage protection device and/or the neutral point of the chopper circuits with the midpoint of the series-connected auxiliary devices.

It also may be that the midpoint between the auxiliary devices is connected via overcurrent protection devices with the respective auxiliary device.

According to an embodiment of the invention, the first capacity and the second capacity of the chopper circuits are discrete devices, for example provided by capacitors. It also may be that the first capacity and the second capacity are parasitic capacities of an energy storage system, for example parasitic capacities of a battery storage system. The auxiliary device(s) also may provide the first and second capacities.

According to an embodiment of the invention, the first switch arrangement comprises a first half-bridge with an upper and lower semiconductor switch, the first half-bridge interconnected between the positive input and the neutral point and providing a first midpoint connected to the first inductor. Analogously, the second switch arrangement comprises a second half-bridge with an upper and lower semiconductor switch, the second half-bridge interconnected between the negative input and the neutral point and providing a second midpoint connected to the second inductor.

For example, the chopper circuits may be realized with efficient low voltage IGBTs, which may allow a high switching frequency, such as 4 kHz. In general, the chopper circuits may be realized with IGBTs or SiC switches or any other type of switches.

A further aspect of the invention relates to a traction vehicle which comprises a converter arrangement as described in the above and the below. The traction vehicle may be a tram or a wagon of a train.

According to an embodiment of the invention, the traction vehicle further comprises a DC link connected between the first input and the second input of the converter arrangement. The DC link may be part of the propulsion system. The propulsion system may comprise an input power converter for converting a grid voltage from an electrical grid and/or a generator voltage from a generator into a DC link voltage of the DC link. When the grid is connected, the converter arrangement may be used for charging the batteries from the grid.

According to an embodiment of the invention, the traction vehicle further comprises at least one electrical motor for driving the traction vehicle and a motor converter for converting the DC link voltage into a motor voltage to be supplied to the at least one electrical motor. When the grid is connected, the electrical motors may be supplied from the electrical grid. When the grid is not connected, the electrical motors may be supplied from energy storage devices via the converter arrangement.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a traction vehicle according to an embodiment of the invention.
Fig. 2 schematically shows a circuit diagram of a converter arrangement according to an embodiment of the invention.
Fig. 3 schematically shows a circuit diagram of a converter arrangement according to a further embodiment of the invention.
Fig. 4 schematically shows a circuit diagram of a converter arrangement according to a further embodiment of the invention.
Fig. 5 schematically shows a circuit diagram of a battery storage system for a converter arrangement according to an embodiment of the invention.
Fig. 6 schematically shows a circuit diagram of a further battery storage system for a converter arrangement according to an embodiment of the invention.
Fig. 7 schematically shows a circuit diagram of a power supply system for a converter arrangement according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

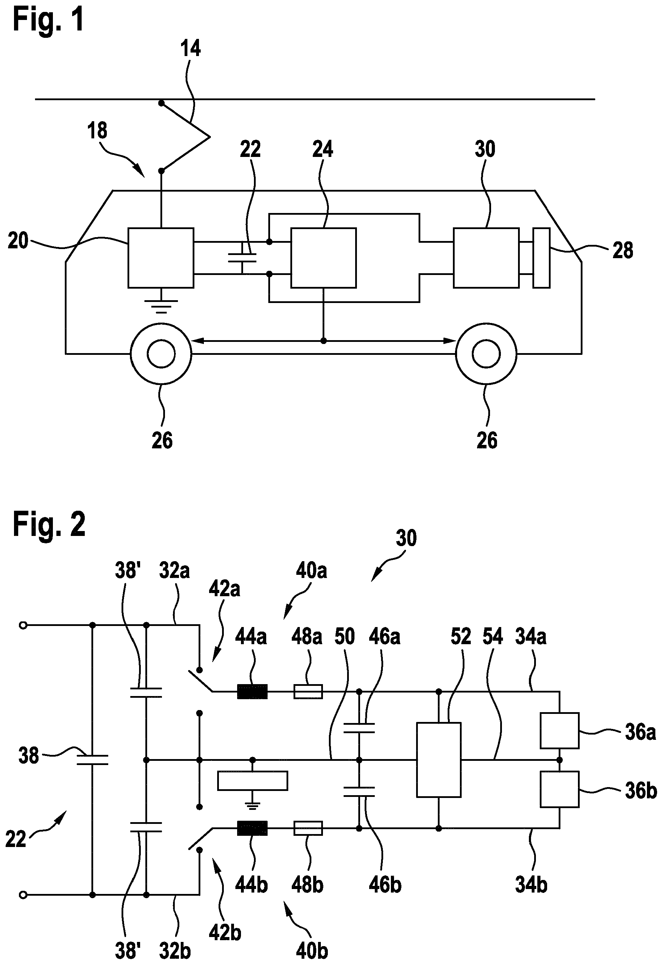

Fig. 1 shows a traction vehicle 10, which may be supplied via a catenary line 14 from an electrical grid 16. The traction vehicle 10 comprises a propulsion system 18 with an input power converter 20, a DC link 22 and a motor converter 24. The converter 20 converts a voltage from the grid 16 into a voltage in the DC link 22. The motor converter 24 converts the voltage in the DC link 22 into a voltage supplied to electrical motors 26, which drive the traction vehicle 10.

The traction vehicle 10 furthermore comprises a energy storage system 28, which is connected via a DC-to-DC converter arrangement 30 with the DC link 22. The energy storage system 28 may be a battery storage system. When the electrical grid 16 is connected, the energy storage system 28 may be charged via the converter arrangement 30 from the DC link 22, which is supplied from the converter 20. When the electrical grid 16 is not connected, the DC link 22 and in particular the electrical motors 26 may be supplied from the energy storage system 28 via the converter arrangement 30.

As shown in Fig. 2, the converter arrangement 30 is connected with a positive input 32a with the positive side of the DC link 22 and with a negative input 32b to a negative side of the DC link 22. The converter arrangement 30 need not be connected to a energy storage system 28 as shown in Fig.1, but also may be connected with a positive output 34a and a negative output 34a to two series-connected auxiliary devices 36a, 36b. The auxiliary devices 36a, 36b may be low voltage inverters, low voltage grids, etc. which may be part of the vehicle 10.

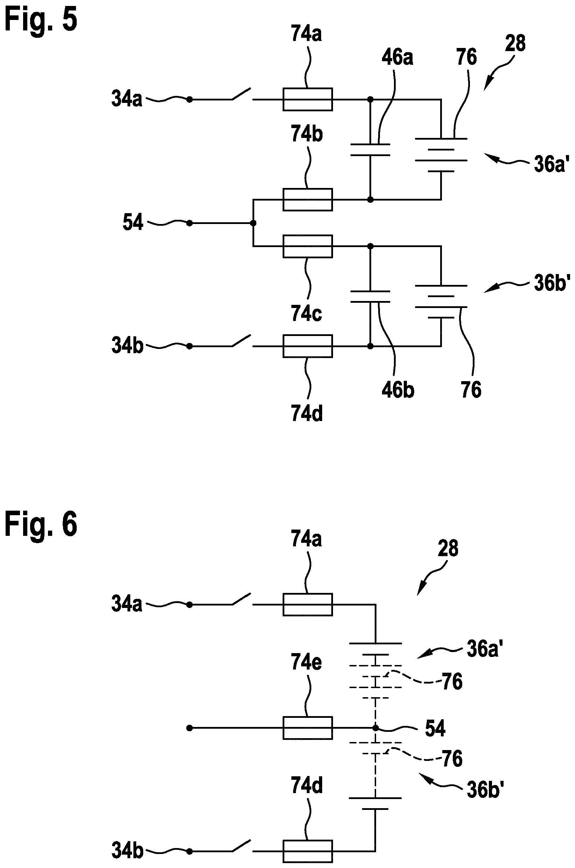

As will be described with respect to Fig. 5 and 6, the auxiliary devices 36a, 36b also may be low voltage battery storage devices.

Fig. 2 shows that the DC link 22 may comprise a two-level DC link without a midpoint, which may be provided by the converter 20 and/or which may have a DC link capacitor 38. The DC link 22 also may comprise a split DC link with two series connected DC link capacitors 38'. In typical traction applications, the DC link voltage may be about 2000 V.

The converter arrangement 30 comprises a first chopper circuit 40a and a second chopper circuit 40b, which are connected via the inputs 32a, 32b with the DC link 22. The first chopper circuit 40a and the second chopper circuit 40b are connected via a neutral point 50.

The first chopper circuit 40a is adapted for connecting the positive input 32a or the neutral point 50 with the positive output 34a. The first chopper circuit 40a comprises a first switch arrangement 42a, a first inductor 44a and a first capacity 46a. The first switch arrangement 42a is adapted for connecting the first inductor 44a with the positive input 32a or with the neutral point 50, the first inductor 44a interconnects the first switch arrangement 42a with the positive output 34a and the first capacity 46a interconnects the positive output 34a with the neutral point 50.

Analogously, the second chopper circuit 40b is adapted for connecting the negative input 32b or the neutral point 50 with the negative output 34b. The second chopper circuit 40b comprises a second switch arrangement 42b, a second inductor 44b and a second capacity 46b. The second switch arrangement 42b is adapted for connecting the second inductor 44b with the negative input 32b or with the neutral point 50, the second inductor 44b interconnects the second switch arrangement 42b with the negative output 34b and the second capacity 46b interconnects the negative output 34b with the neutral point 50.

The first capacity 46a and the second capacity 46a may be provided by discrete devices, i.e. by capacitors.

Furthermore, a first input side overcurrent protection device 48a, such as a fuse, may be connected between the first inductor 44a and the first capacity 46a and a second input side overcurrent protection device 48b, such as a fuse, may be connected between the second inductor 44b and the second capacity 46b.

The converter arrangement 30 furthermore may comprise an overvoltage protection device 52 adapted for short-circuiting the positive output 34a with the negative output 34b, when an overvoltage is measured between the positive output 34a and the negative output 34b.

The overvoltage protection device 52 also may be connected to the neutral point 50 and/or may be adapted for short-circuiting the positive output 34a, the neutral point 50 and the negative output 34b, when an overvoltage is measured between the positive output 34a and the neutral point 50 and/or an overvoltage is measured between the negative output 34b and the neutral point 50.

The overvoltage protection device 52 also may be connected to a midpoint 54 between the auxiliary devices 36a, 36b and/or may be adapted for short-circuiting the positive output 34a, the midpoint 54 and the negative output 34b, when an overvoltage is measured between the positive output 34a and the midpoint 54 and/or an overvoltage is measured between the negative output 34b and the midpoint 54.

The overvoltage protection device 52 may comprise a controller and sensors for measuring the above-mentioned voltages and for actuating its semiconductor switches as described above and below.

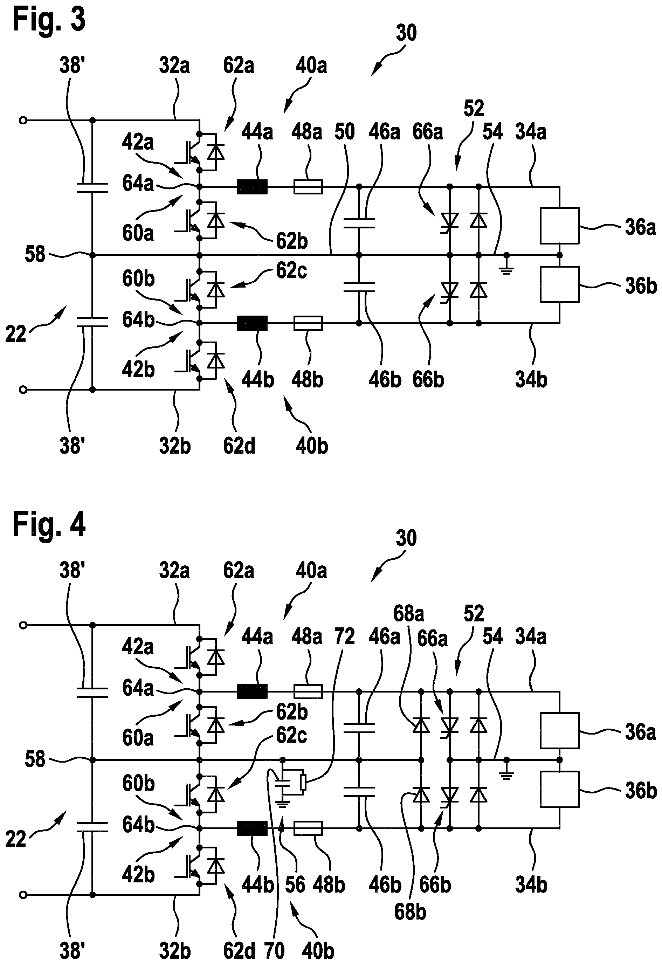

Fig. 2 furthermore shows that the neutral point 50 may be grounded. This may be done via a grounding device 56, for example such as shown in Fig. 4 or directly.

Fig. 3 shows a further embodiment of a converter arrangement 30. The DC link 22 of Fig. 3 is a three-level DC link with a midpoint 58 between the two DC link capacitors 38'.

The neutral point 50 of the chopper circuits may be connected to the midpoint 58 of the DC link. Furthermore, the neutral point 50 may be connected to the midpoint 54 of the auxiliary devices 36a, 6b and/or may be directly, i.e. hard grounded.

Fig. 3 also shows an embodiment for the switching arrangements 42a, 42b of the chopper circuits 40a, 40b. The first switch arrangement 42a comprises a first half-bridge 60a with an upper semiconductor switch 62a and lower semiconductor switch 62b. The first half-bridge 60a is interconnected between the positive input 32a and the neutral point 50 and provides a first midpoint 64a connected to the first inductor 44a. The second switch arrangement 42b comprises a second half-bridge 60b with an upper semiconductor switch 62c and lower semiconductor switch 62d. The second half-bridge 60b is interconnected between the negative input 32b and the neutral point 50 and provides a second midpoint 64b connected to the second inductor 44b.

Fig. 3 further shows an embodiment for the overvoltage protection device 52. The overvoltage protection device 50 comprises a first semiconductor switch 66a connecting the positive output 34a and the neutral point 50 and a second semiconductor switch 66b connecting the neutral point 50 with the negative output 34b. Each of the switches 66a may comprise a thyristor and a free-wheeling diode. The thyristor may be triggered, when the overvoltage protection device 52 is activated.

Fig. 4 shows a further embodiment of a converter arrangement 30. In the case of Fig. 4, the neutral point 50 and the midpoint 54 are not directly connected. The neutral point 50 is softly grounded via a grounding device 56 with a capacitor 70 and a parallel resistor 72. The midpoint 54 is hard grounded.

The capacitive grounded neutral point 50 may limit ground fault currents in the propulsion system 18. The hard grounded midpoint 54 may provide maximum safety with a robust circuit.

In the case of Fig. 4, the overvoltage protection device 52 comprises a first semiconductor switch 66a connecting the positive output 34a and the midpoint 54 and a second semiconductor switch 66b connecting the midpoint 54 with the negative output 34b. It furthermore comprises a first diode 68a connected between the neutral point 50 and the positive output 34a and a second diode 68b connected between the negative output 34b and the neutral point 50. The diodes 68a, 68b may be needed if the capacitors 46a, 46b are realized as electrolytic capacitors, which may not be reverse charged. In particular, the diode 68a protects the capacitor 46a against reverse charging in the event that switch 62b makes a short circuit and the capacitor 46a is unloading via inductor 44a and the defect switch 62b. The diode 68a ma be free wheeling the reverse charging current. The same applies to the diode 68a and the components of the chopper circuit 40b.

Fig. 5 shows a battery storage system 28, which is composed of two series-connected battery storage devices 36a', 36b'. Each battery storage device 36a', 36b' may comprise battery cells 76 and/or be provided with an own housing and may be separately protected with overcurrent protection devices 74a, 74b, 74c, 74d, such as fuses.

In general, the battery storage devices 36a', 36b' also may be auxiliary devices 36a, 36b as in Fig. 2 to 4 and vice versa.

The output side overcurrent protection device 74a may be connected between the positive output 34a and the first auxiliary device 36a'. The output side overcurrent protection device 74b may be connected between the midpoint 54 and the first auxiliary device 36a'. The output side overcurrent protection device 74c may be connected between the midpoint 54 and the second auxiliary device 36b'. The output side overcurrent protection device 74d may be connected between the negative output 34b and the second auxiliary device 36b'.

Fig. 5 also shows that the capacities 46a, 46b may be provided by the energy and/or battery storage system 28. For example, the capacities 46a, 46b may be parasitic capacities of the battery cells 76.

As shown in Fig. 6, the battery storage system 28 may be realized as a series connection of battery cells 76 in one housing with midpoint 54 provided between the battery cells 76. An output side overcurrent protection device 74e may be connected to this midpoint 54. The overcurrent protection device 74e also may be connected to the midpoint of the overvoltage protection device 52, such as in Fig. 4, and/or the neutral point 50 of the chopper circuits 40a, 40b such as shown in Fig. 3.

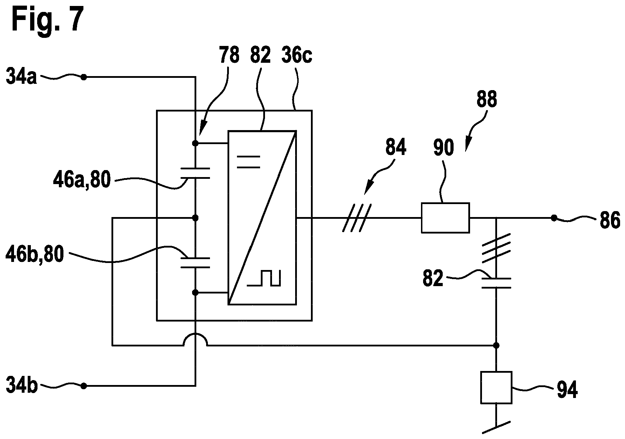

Fig. 7 shows that instead of two first auxiliary devices 36a, 36b one auxiliary device 36c may be used, which may be connected between the outputs 34a, 34b. For example, the auxiliary device 36c may be a power supply unit. The neutral point 50 need not be connected to the auxiliary device 36c.

In the case of a power supply unit, the auxiliary device 36c may comprise an internal DC link 78 with two capacitors 80 connected in series, which are connected between the outputs 34a, 34b. The capacitors 80 also may provide the capacities 46a, 46b for the chopper circuits 40a, 40b.

The auxiliary device 36c may comprise an inverter 82, which is also connected between the outputs and/or which may provide on an output side 84 one or more phases 86 of an auxiliary voltage. In this or these output phases 86 a sine filter 88 with an inductor 90 and a capacitor 92 may be interconnected. The capacitors 92 of more than one phase 86 may be star-connected and/or may be connected soft, hard or not to ground, for example via a grounding device 94, which may be designed like the grounding device 56. A midpoint of the internal DC link 78 may be connected to the star-point of the capacitors 92.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: traction vehicle
- 14: catenary line
- 16: electrical grid
- 18: propulsion system
- 20: input power converter
- 22: DC link
- 24: motor converter
- 26: electrical motor
- 28: energy storage system
- 30: converter arrangement
- 32a: positive input
- 32b: negative input
- 34a: positive output
- 34b: negative output
- 36a: first auxiliary device
- 36b: second auxiliary device
- 38: DC link capacitor
- 38': DC link capacitor
- 40a: first chopper circuit
- 40b: second chopper circuit
- 42a: first switch arrangement
- 42b: second switch arrangement
- 44a: first inductor
- 44b: second inductor
- 46a: first capacity
- 46b: second capacity
- 48a: first input side overcurrent protection device
- 48b: second input side overcurrent protection device
- 50: neutral point
- 52: overvoltage protection device
- 54: midpoint
- 56: grounding device
- 36a': first battery storage device
- 36b': second battery storage device
- 58: midpoint of DC link
- 60a: first half-bridge
- 60b: second half-bridge
- 62a: first upper semiconductor switch
- 62b: first lower semiconductor switch
- 62c: second upper semiconductor switch
- 62d: second lower semiconductor switch
- 64a: first midpoint
- 64b: second midpoint
- 66a: first semiconductor switch
- 66b: second semiconductor switch
- 68a: first diode
- 68b: second diode
- 70: capacitor
- 72: resistor
- 74a: output side overcurrent protection device
- 74b: output side overcurrent protection device
- 74c: output side overcurrent protection device
- 74d: output side overcurrent protection device
- 74e: output side overcurrent protection device
- 76: battery cell
- 36c: power supply unit
- 78: internal DC link
- 80: capacitor
- 82: inverter
- 84: output side
- 86: phase of auxiliary voltage
- 88: sine filter
- 90: inductor
- 92: capacitor
- 94: grounding device

## Claims

1. A converter arrangement (30), comprising:
a first chopper circuit (40a) configured to connect a positive input (32a) or a neutral point (50) with a positive output (34a), wherein the first chopper circuit (40a) comprises a first switch arrangement (42a), a first inductor (44a) and a first capacity (46a), wherein the first switch arrangement (42a) is configured to connect the first inductor (44a) with the positive input (32a) or with the neutral point (50), the first inductor (44a) configured to interconnect the first switch arrangement (42a) with the positive output (34a) and the first capacity (46a) configured to interconnect the positive output (34a) with the neutral point (50);
a second chopper circuit (40b) configured to connect a negative input (32b) or the neutral point (50) with a negative output (34b), wherein the second chopper circuit (40b) comprises a second switch arrangement (42b), a second inductor (44b) and a second capacity (46b), wherein the second switch arrangement (42b) is configured to connect the second inductor (44b) with the negative input (32b) or with the neutral point (50), the second inductor (44b) configured to interconnect the second switch arrangement (42b) with the negative output (34b) and the second capacity (46b) configured to interconnect the negative output (34b) with the neutral point (50);
**characterized by**
a first auxiliary device (36a) and a second auxiliary device (36b) connected between the positive output (34a) and the negative output (34b), wherein a midpoint (54) between the first auxiliary device (36a) and the second auxiliary device (36b) and the neutral point (50) are separated;
an overvoltage protection device (52) configured to short-circuit the positive output (34a), the midpoint (54) and the negative output (34b), when an overvoltage is measured between the positive output (34a) and/or the negative output (34b) and the midpoint (54);
wherein the overvoltage protection device (52) comprises a first semiconductor switch (66a) connecting the positive output (34a) and the midpoint (54) between the first auxiliary device (36a) and the second auxiliary device (36b) and a second semiconductor switch (66b) connecting the midpoint (54) with the negative output (34b).

2. The converter arrangement (30) of claim 1,
wherein the neutral point (50) is grounded; or
wherein the neutral point (50) is grounded via a capacitor (70) and/or a resistor (72).

3. The converter arrangement (30) of one of the previous claims, further comprising:
a DC link (22) interconnecting the positive input (32a) and the negative input (32b);
wherein the DC link (22) is supplied by an input power converter (20), which is adapted to convert a grid voltage and/or generator voltage into the DC link voltage.

4. The converter arrangement (30) of claim 3,
wherein the neutral point (50) is connected to a midpoint (58) of the DC link (22).

5. The converter arrangement (30) of one of the previous claims, further comprising:
a first input side overcurrent protection device (48a) between the positive input (32a) and the positive output (34a); and/or
a second input side overcurrent protection device (48b) between the negative input (32b) and the negative output (34b).

6. The converter arrangement (30) of one of the previous claims, further comprising:
an auxiliary device (36c) connected between the positive output (34a) and the negative output (34b);
wherein the auxiliary device (36c) comprises an inverter (82) for generating an AC voltage from the Dc voltage provided between the positive output (34a) and the negative output (34b).

7. The converter arrangement (30) of one of the previous claims,
wherein the first auxiliary device (36a) is a first battery storage device (36a') and the second auxiliary device (36b) is a second battery storage device (36b').

8. The converter arrangement (30) of one of the previous claims,
wherein the overvoltage protection device (52) comprises a first diode (68a) connected between the neutral point (50) and the positive output (34a) and a second diode (68b) connected between the negative output (34b) and the neutral point (50).

9. The converter arrangement (30) of one of the previous claims,
wherein the midpoint (54) between the first auxiliary device (36a) and the second auxiliary device (36b) is directly connected to ground.

10. The converter arrangement (30) of one of the previous claims, further comprising:
a first output side overcurrent protection device (74a) between the positive output (34a) and the first auxiliary device (36a'); and/or
a second output side overcurrent protection device (74d) between the negative output (34b) and the second auxiliary device (36b'); and/or
a third output side overcurrent protection device (74b, 74c) connected to the midpoint (54) between the first auxiliary device (36a') and the second auxiliary device (36b').

11. The converter arrangement (30) of one of the previous claims,
wherein the first capacity (46a) and the second capacity (46b) are discrete devices; and/or
wherein the first capacity (46a) and the second capacity (46b) are parasitic capacities of an energy storage system (28).

12. The converter arrangement (30) of one of the previous claims,
wherein the first switch arrangement (42a) comprises a first half-bridge (60a) with an upper semiconductor switch (62a) and lower semiconductor switch (62b), the first half-bridge (60a) interconnected between the positive input (32a) and the neutral point (50) and providing a first midpoint (64a) connected to the first inductor (44a);
wherein the second switch arrangement (42b) comprises a second half-bridge (60b) with an upper semiconductor switch (62c) and lower semiconductor switch (62d), the second half-bridge (60b) interconnected between the negative input (32b) and the neutral point (50) and providing a second midpoint (64b) connected to the second inductor (44b).

13. A traction vehicle (10), comprising:
a converter arrangement (30) according to one of the previous claims;
a DC link (22) connected between the first input (32a) and the second input (32b) of the converter arrangement (30);
a input power converter (20) for converting a grid and/or generator voltage into a DC link voltage of the DC link (22);
at least one electrical motor (26) for driving the traction vehicle (10);
a motor converter (24) for converting the DC link voltage into a motor voltage to be supplied to the at least one electrical motor (26).

## Patentansprüche

1. Umrichteranordnung (30), umfassend:
eine erste Zerhackerschaltung (40a), konfiguriert zum Verbinden eines positiven Eingangs (32a) oder eines neutralen Punkts (50) mit einem positiven Ausgang (34a), wobei die erste Zerhackerschaltung (40a) eine erste Schalteranordnung (42a), einen ersten Induktor (44a) und eine erste Kapazität (46a) umfasst, wobei die erste Schalteranordnung (42a) konfiguriert ist zum Verbinden des ersten Induktors (44a) mit dem positive Eingang (32a) oder mit dem neutralen Punkt (50), der erste Induktor (44a) konfiguriert ist zum Verschalten der ersten Schalteranordnung (42a) mit dem positive Ausgang (34a) und die erste Kapazität (46a) konfiguriert ist zum Verschalten des positiven Ausgangs (34a) mit dem neutralen Punkt (50);
eine zweite Zerhackerschaltung (40b), konfiguriert zum Verbinden eines negativen Eingangs (32b) oder des neutralen Punkts (50) mit einem negative Ausgang (34b), wobei die zweite Zerhackerschaltung (40b) eine zweite Schalteranordnung (42b), einen zweiten Induktor (44b) und eine zweite Kapazität (46b) umfasst, wobei die zweite Schalteranordnung (42b) konfiguriert ist zum Verbinden des zweiten Induktors (44b) mit dem negative Eingang (32b) oder mit dem neutralen Punkt (50), der zweite Induktor (44b) konfiguriert ist zum Verschalten der zweiten Schalteranordnung (42b) mit dem negative Ausgang (34b) und die zweite Kapazität (46b) konfiguriert ist zum Verschalten des negativen Ausgangs (34b) mit dem neutralen Punkt (50);
**gekennzeichnet durch**
eine erste Hilfsvorrichtung (36a) und eine zweite Hilfsvorrichtung (36b), verbunden zwischen dem positiven Ausgang (34a) und dem negativen Ausgang (34b), wobei ein Mittenpunkt (54) zwischen der ersten Hilfsvorrichtung (36a) und der zweiten Hilfsvorrichtung (36b) und der neutrale Punkt (50) getrennt sind;
eine Überspannung-Schutzvorrichtung (52), konfiguriert zum Kurzschließen des positiven Ausgangs (34a), des Mittenpunkts (54) und des negativen Ausgangs (34b), wenn eine Überspannung zwischen dem positiven Ausgang (34a) und/oder dem negativen Ausgang (34b) und dem Mittenpunkt (54) gemessen wird;
wobei die Überspannung-Schutzvorrichtung (52) einen ersten Halbleiter-Schalter (66a), der den positiven Ausgang (34a) und den Mittenpunkt (54) zwischen der ersten Hilfsvorrichtung (36a) und der zweiten Hilfsvorrichtung (36b) verbindet, und einen zweiten Halbleiter-Schalter (66b), der den Mittenpunkt (54) mit dem negativen Ausgang (34b) verbindet, umfasst.

2. Umrichteranordnung (30) nach Anspruch 1,
wobei der neutrale Punkt (50) geerdet ist; oder
wobei der neutrale Punkt (50) über einen Kondensator (70) und/oder einen Widerstand (72) geerdet ist.

3. Umrichteranordnung (30) nach einem der vorhergehenden Ansprüche, ferner umfassend:
einen DC-Zwischenkreis (22), der den positiven Eingang (32a) und den negativen Eingang (32b) verschaltet;
wobei der DC-Zwischenkreis (22) durch einen Eingangsleistungsumrichter (20) versorgt wird, der angepasst ist, eine Netzspannung und/oder Generatorspannung in die DC-Zwischenkreisspannung umzuwandeln

4. Umrichteranordnung (30) nach Anspruch 3,
wobei der neutrale Punkt (50) mit einem Mittenpunkt (58) des DC-Zwischenkreises (22) verbunden ist.

5. Umrichteranordnung (30) nach einem der vorhergehenden Ansprüche, ferner umfassend:
eine erste eingangsseitige Überstromschutzvorrichtung (48a) zwischen dem positiven Eingang (32a) und dem positiven Ausgang (34a); und/oder
eine zweite eingangsseitige Überstromschutzvorrichtung (48b) zwischen dem negativen Eingang (32b) und dem negativen Ausgang (34b).

6. Umrichteranordnung (30) nach einem der vorhergehenden Ansprüche, ferner umfassend:
eine Hilfsvorrichtung (36c), verbunden zwischen dem positiven Ausgang (34a) und dem negativen Ausgang (34b);
wobei die Hilfsvorrichtung (36c) einen Inverter (82) zum Erzeugen einer AC-Spannung aus der DC-Spannung, die zwischen dem positiven Ausgang (34a) und dem negativen Ausgang (34b) bereitgestellt wird, umfasst.

7. Umrichteranordnung (30) nach einem der vorhergehenden Ansprüche,
wobei die erste Hilfsvorrichtung (36a) eine erste Batteriespeichervorrichtung (36a') ist und die zweite Hilfsvorrichtung (36b) eine zweite Batteriespeichervorrichtung (36b') ist.

8. Umrichteranordnung (30) nach einem der vorhergehenden Ansprüche,
wobei die Überspannung-Schutzvorrichtung (52) eine erste Diode (68a), die zwischen dem neutralen Punkt (50) und dem positiven Ausgang (34a) verbunden ist, und eine zweite Diode (68b), die zwischen dem negativen Ausgang (34b) und dem neutralen Punkt (50) verbunden ist, umfasst.

9. Umrichteranordnung (30) nach einem der vorhergehenden Ansprüche,
wobei der Mittenpunkt (54) zwischen der ersten Hilfsvorrichtung (36a) und der zweiten Hilfsvorrichtung (36b) direkt mit Erde verbunden ist.

10. Umrichteranordnung (30) nach einem der vorhergehenden Ansprüche, ferner umfassend:
eine erste ausgangsseitige Überstromschutzvorrichtung (74a) zwischen dem positiven Ausgang (34a) und der ersten Hilfsvorrichtung (36a'); und/oder
eine zweite ausgangsseitige Überstromschutzvorrichtung (74d) zwischen dem negativen Ausgang (34b) und der zweiten Hilfsvorrichtung (36b'); und/oder
eine dritte ausgangsseitige Überstromschutzvorrichtung (74b, 74c), verbunden mit dem Mittenpunkt (54) zwischen der ersten Hilfsvorrichtung (36a') und der zweiten Hilfsvorrichtung (36b').

11. Umrichteranordnung (30) nach einem der vorhergehenden Ansprüche,
wobei die erste Kapazität (46a) und die zweite Kapazität (46b) diskrete Vorrichtungen sind; und/oder
wobei die erste Kapazität (46a) und die zweite Kapazität (46b) parasitäre Kapazitäten eines Energiespeichersystems (28) sind.

12. Umrichteranordnung (30) nach einem der vorhergehenden Ansprüche,
wobei die erste Schalteranordnung (42a) eine erste Halbbrücke (60a) mit einem oberen Halbleiter-Schalter (62a) und unteren Halbleiter-Schalter (62b) umfasst, die erste Halbbrücke (60a) zwischen dem positiven Eingang (32a) und dem neutralen Punkt (50) verschaltet und einen ersten Mittenpunkt (64a) bereitstellt, der mit dem ersten Induktor (44a) verbunden ist;
wobei die zweite Schalteranordnung (42b) eine zweite Halbbrücke (60b) mit einem oberen Halbleiter-Schalter (62c) und unteren Halbleiter-Schalter (62d) umfasst, die zweite Halbbrücke (60b) zwischen dem negativen Eingang (32b) und dem neutralen Punkt (50) verschaltet und einen zweiten Mittenpunkt (64b) bereitstellt, der mit dem zweiten Induktor (44b) verbunden ist.

13. Zugfahrzeug (10), umfassend:
eine Umrichteranordnung (30) nach einem der vorhergehenden Ansprüche;
einen DC-Zwischenkreis (22), verbunden zwischen dem ersten Eingang (32a) und dem zweiten Eingang (32b) der Umrichteranordnung (30);
einen Eingangsleistungsumrichter (20) zum Umwandeln einer Netz- und/oder Generatorspannung in eine DC-Zwischenkreisspannung des DC-Zwischenkreises (22);
mindestens einen Elektromotor (26) zum Antreiben des Zugfahrzeugs (10);
einen Motor-Umrichter (24) zum Umwandeln der DC-Zwischenkreisspannung in eine Motorspannung, die dem mindestens einen Elektromotor (26) zuzuführen ist.

## Revendications

1. Agencement convertisseur (30), comprenant :
un premier circuit hacheur (40a) configuré pour connecter une entrée positive (32a) ou un point neutre (50) à une sortie positive (34a), le premier circuit hacheur (40a) comprenant un premier agencement commutateur (42a), une première inductance (44a) et une première capacité (46a), le premier agencement commutateur (42a) étant configuré pour connecter la première inductance (44a) à l'entrée positive (32a) ou au point neutre (50), la première inductance (44a) étant configurée pour interconnecter le premier agencement commutateur (42a) et la sortie positive (34a), et la première capacité (46a) étant configurée pour interconnecter la sortie positive (34a) et le point neutre (50) ;
un deuxième circuit hacheur (40b) configuré pour connecter une entrée négative (32b) ou le point neutre (50) à une sortie négative (34b), le deuxième circuit hacheur (40b) comprenant un deuxième agencement commutateur (42b), une deuxième inductance (44b) et une deuxième capacité (46b), le deuxième agencement commutateur (42b) étant configuré pour connecter la deuxième inductance (44b) à l'entrée négative (32b) ou au point neutre (50), la deuxième inductance (44b) étant configurée pour interconnecter le deuxième agencement commutateur (42b) et la sortie négative (34b), et la deuxième capacité (46b) étant configurée pour interconnecter la sortie négative (34b) et le point neutre (50) ;
**caractérisé par**
un premier dispositif auxiliaire (36a) et un deuxième dispositif auxiliaire (36b) connectés entre la sortie positive (34a) et la sortie négative (34b), un point milieu (54) entre le premier dispositif auxiliaire (36a) et le deuxième dispositif auxiliaire (36b) et le point neutre (50) étant séparés ;
un dispositif de protection contre les surtensions (52) configuré pour court-circuiter la sortie positive (34a), le point milieu (54) et la sortie négative (34b), lorsqu'une surtension est mesurée entre la sortie positive (34a) et/ou la sortie négative (34b) et le point milieu (54) ;
le dispositif de protection contre les surtensions (52) comprenant un premier commutateur à semi-conducteur (66a) connectant la sortie positive (34a) et le point milieu (54) entre le premier dispositif auxiliaire (36a) et le deuxième dispositif auxiliaire (36b) et un deuxième commutateur à semi-conducteur (66b) connectant le point milieu (54) à la sortie négative (34b).

2. Agencement convertisseur (30) selon la revendication 1,
dans lequel le point neutre (50) est mis à la terre ; ou
dans lequel le point neutre (50) est mis à la terre via un condensateur (70) et/ou une résistance (72).

3. Agencement convertisseur (30) selon l'une des revendications précédentes, comprenant en outre :
une liaison à courant continu (22) interconnectant l'entrée positive (32a) et l'entrée négative (32b) ;
la liaison à courant continu (22) étant alimentée par un convertisseur de puissance d'entrée (20), lequel est adapté à convertir une tension de réseau et/ou une tension de génératrice en la tension de liaison à courant continu.

4. Agencement convertisseur (30) selon la revendication 3,
dans lequel le point neutre (50) est connecté à un point milieu (58) de la liaison à courant continu (22).

5. Agencement convertisseur (30) selon l'une des revendications précédentes, comprenant en outre :
un premier dispositif de protection contre les surintensités côté entrée (48a) entre l'entrée positive (32a) et la sortie positive (34a) ; et/ou
un deuxième dispositif de protection contre les surintensités côté entrée (48b) entre l'entrée négative (32b) et la sortie négative (34b).

6. Agencement convertisseur (30) selon l'une des revendications précédentes, comprenant en outre :
un dispositif auxiliaire (36c) connecté entre la sortie positive (34a) et la sortie négative (34b) ;
le dispositif auxiliaire (36c) comprenant un onduleur (82) pour générer un tension alternative à partir de la tension continue fournie entre la sortie positive (34a) et la sortie négative (34b).

7. Agencement convertisseur (30) selon l'une des revendications précédentes,
dans lequel le premier dispositif auxiliaire (36a) est un premier dispositif de stockage par batterie (36a') et le deuxième dispositif auxiliaire (36b) est un deuxième dispositif de stockage par batterie (36b').

8. Agencement convertisseur (30) selon l'une des revendications précédentes,
dans lequel le dispositif de protection contre les surtensions (52) comprend une première diode (68a) connectée entre le point neutre (50) et la sortie positive (34a) et une deuxième diode (68b) connectée entre la sortie négative (34b) et le point neutre (50).

9. Agencement convertisseur (30) selon l'une des revendications précédentes,
dans lequel le point milieu (54) entre le premier dispositif auxiliaire (36a) et le deuxième dispositif auxiliaire (36b) est directement connecté à la terre.

10. Agencement convertisseur (30) selon l'une des revendications précédentes, comprenant en outre :
un premier dispositif de protection contre les surintensités côté sortie (74a) entre la sortie positive (34a) et le premier dispositif auxiliaire (36a') ; et/ou
un deuxième dispositif de protection contre les surintensités côté sortie (74d) entre la sortie négative (34b) et le deuxième dispositif auxiliaire (36b') ; et/ou
un troisième dispositif de protection contre les surintensités côté sortie (74b, 74c) connecté au point milieu (54) entre le premier dispositif auxiliaire (36a') et le deuxième dispositif auxiliaire (36b').

11. Agencement convertisseur (30) selon l'une des revendications précédentes,
dans lequel la première capacité (46a) et la deuxième capacité (46b) sont des dispositifs discrets ; et/ou
dans lequel la première capacité (46a) et la deuxième capacité (46b) sont des capacités parasites d'un système de stockage d'énergie (28).

12. Agencement convertisseur (30) selon l'une des revendications précédentes,
dans lequel le premier agencement commutateur (42a) comprend un premier demi-pont (60a) avec un commutateur à semi-conducteur supérieur (62a) et un commutateur à semi-conducteur inférieur (62b), le premier demi-pont (60a) étant interconnecté entre l'entrée positive (32a) et le point neutre (50) et fournissant un premier point milieu (64a) connecté à la première inductance (44a) ;
dans lequel le deuxième agencement commutateur (42b) comprend un deuxième demi-pont (60b) avec un commutateur à semi-conducteur supérieur (62c) et un commutateur à semi-conducteur inférieur (62d), le deuxième demi-pont (60b) étant interconnecté entre l'entrée négative (32b) et le point neutre (50) et fournissant un deuxième point milieu (64b) connecté à la deuxième inductance (44b).

13. Véhicule de traction (10), comprenant :
un agencement convertisseur (30) selon l'une des revendications précédentes ;
une liaison à courant continu (22) connectée entre la première entrée (32a) et la deuxième entrée (32b) de l'agencement convertisseur (30) ;
un convertisseur de puissance d'entrée (20) pour convertir une tension de réseau et/ou de génératrice en une tension de liaison à courant continu de la liaison à courant continu (22) ;
au moins un moteur électrique (26) pour entraîner le véhicule de traction (10) ;
un convertisseur de moteur (24) pour convertir la tension de liaison à courant continu en une tension de moteur destinée à alimenter l'au moins un moteur électrique (26).
